# EUROPÄISCHE PATENTANMELDUNG

(11) **EP 2 907 552 A1**
(43) Veröffentlichungstag der Anmeldung: **19.08.2015**
(21) Anmeldenummer: 14155242.2
(22) Anmeldetag: 14.02.2014
(51) Int. Cl.: A63B 29/02

(54) **Suchgerät und Verfahren zum Betreiben eines Suchgeräts**

(71) Anmelder: Ortovox Sportartikel GmbH, 82024 Taufkirchen (DE)
(72) Erfinder: Matzner, Rolf, 80639 München (DE)
(74) Vertreter: Hofstetter, Schurack & Partner

(57) **Zusammenfassung**

Die vorliegende Erfindung betrifft ein Suchgerät (10), insbesondere Lawinen-Verschütteten-Suchgerät, mit einer Sendeeinheit (12) mit mindestens einer Sendeantenne (14) zum Senden On-Off-modulierter Sendesignale, welche zumindest einen Sendepuls umfassen, der eine vorgebbare Sendefrequenz, eine vorgebbare Periodendauer sowie eine vorgebbare Einschaltdauer aufweist; einer Parameterermittlungsvorrichtung (16), die ausgelegt ist, zumindest einen bergungsrelevanten Parameter zu ermitteln; sowie einer Verarbeitungsvorrichtung (28), die mit der Parameterermittlungsvorrichtung (16) gekoppelt und ausgelegt ist, den zumindest einen bergungsrelevanten Parameter zu verarbeiten; wobei die Verarbeitungsvorrichtung (28) weiterhin mit der Sendeeinheit (12) gekoppelt ist, wobei die Verarbeitungsvorrichtung (28) ausgelegt ist, in Abhängigkeit des zumindest einen von der Parameterermittlungsvorrichtung (16) bereitgestellten bergungsrelevanten Parameters die vorgebbare Periodendauer und/oder die vorgebbare Einschaltdauer und/oder die vorgebbare Sendefrequenz des Sendesignals festzulegen und an die Sendeeinheit (12) bereitzustellen, wobei die Sendeeinheit (12) ausgelegt ist, das Sendesignal mit der von der Verarbeitungsvorrichtung (28) bereitgestellten vorgebbaren Periodendauer und/oder der vorgebbaren Einschaltdauer und/oder der vorgebbaren Sendefrequenz zu senden. Die Erfindung betrifft überdies ein entsprechendes Verfahren zum Betreiben eines Suchgeräts (10).

## Beschreibung

Die vorliegende Erfindung betrifft ein Suchgerät, insbesondere ein Lawinen-Verschütteten-Suchgerät (LVSG) mit einer Sendeeinheit mit mindestens einer Sendeantenne zum Senden On-Off-modulierter Sendesignale, welche zumindest einen Sendepuls umfassen, der eine vorgebbare Sendefrequenz, eine vorgebbare Periodendauer sowie eine vorgebbare Einschaltdauer aufweist, einer Parameterermittlungsvorrichtung, die ausgelegt ist, zumindest einen bergungsrelevanten Parameter zu ermitteln, sowie einer Verarbeitungsvorrichtung, die mit der Parameterermittlungsvorrichtung gekoppelt und ausgelegt ist, den zumindest einen bergungsrelevanten Parameter zu verarbeiten. Sie betrifft weiterhin ein Verfahren zum Betreiben eines derartigen Suchgeräts.

Bergungsrelevante Parameter sind Parameter, die bei der Bergung eines Verschütteten von besonderer Relevanz sein können, da sie einen Rückschluss auf den Zustand des Verschütteten zulassen. Bei mehreren Verschütteten können sich daraus Prioritäten hinsichtlich der Bergungsreihenfolge ableiten lassen. Ein bergungsrelevanter Parameter ist beispielsweise der Vitalzustand des Verschütteten.

In diesem Zusammenhang ist die EP 1 785 168 A1 bekannt, die darauf hinweist, dass die Erfolgschancen, dass Verschüttete lebend, ohne bleibende gesundheitliche Schäden geborgen werden können, hoch sind, wenn die Bergung innerhalb von beispielsweise 15 Min. nach dem Lawinenniedergang erfolgen kann. Sie schlägt zur Steigerung der Effizienz der Rettung vor, dass die Retter Kenntnis über den aktuellen medizinischen Zustand der zu bergenden Verschütteten haben. Dadurch kann die Bergung zunächst auf diejenigen Opfer konzentriert werden, die den eigentlichen Lawinenniedergang überlebt haben.

Zur Detektion von Lebenszeichen wird ein Beschleunigungssensor verwendet. Der Beschleunigungssensor kann nun den Vitalzustand des Benutzers aufgrund der Bewegungen des Benutzers, das heißt Bewegungen, die das LVSG mitmacht, erfassen. Bewegungen können sich ergeben aus Herzpuls, Puls in einem Blutgefäß, Atmung, Muskelbewegungen. Zur Übertragung dieser Lebenszeichen werden die beteiligten LVSGs mit einer drahtlosen Kommunikationseinrichtung versehen, welche die Kommunikation unter mehreren LVSGs ermöglicht. Dabei werden Frequenzbänder verwendet, welche für den lizenzfreien Betrieb von so genannten Short Range Devices (SRD) freigegeben sind. Die genannte Druckschrift schlägt hierbei insbesondere Frequenzen unter 1 GHz vor. Geeignete SRD-Frequenzbänder liegen beispielsweise bei 433 MHz, 868 MHz sowie 902 bis 928 MHz. Die zu erwartende Reichweite liegt im Bereich 20 m bis 100 m.

Zum weiteren Stand der Technik wird verwiesen auf die EP 1 785 170 A1 sowie die FR 2 819 335 A1.

Für diese zusätzliche Kommunikation muss demnach ein eigener Funkkanal bereitgestellt werden, der eine eigene Sendeeinheit mit eigener Sendeantenne umfasst. Die Bereitstellung dieses separaten Funkkanals führt zu einem zusätzlichen Bauraumerfordernis, zu zusätzlichem Gewicht sowie zu zusätzlichen Kosten. Um die Verbreitung derartiger LVSGs zu erhöhen, sind die Kosten möglichst niedrig zu halten. Da derartige LVSGs beim Skifahren mitzuführen sind, sollten sie überdies möglichst klein, handlich und möglichst leicht ausgebildet werden.

Die der vorliegenden Erfindung zugrunde liegende Aufgabe besteht deshalb darin, ein eingangs genanntes Suchgerät sowie ein eingangs genanntes Verfahren derart weiterzubilden, dass eine Erhöhung der Überlebenschancen bei der Bergung ermöglicht wird und zwar bei möglichst geringem Gewicht, möglichst kleinem Bauraum und möglichst geringen Kosten des Suchgeräts.

Diese Aufgabe wird gelöst durch ein Suchgerät mit den Merkmalen von Patentanspruch 1 sowie durch ein Verfahren mit den Merkmalen von Patentanspruch 12.

Die vorliegende Erfindung basiert auf der Erkenntnis, dass zur Lösung der obigen Aufgabe ein besonders leichtes, kostengünstiges und kleines Suchgerät dann bereitgestellt werden kann, wenn bei dem ohnehin zu übertragenden Sendesignal in Abhängigkeit des zumindest einen von der Parameterermittlungsvorrichtung bereitgestellten bergungsrelevanten Parameters die vorgebbare Periodendauer und/oder die vorgebbare Einschaltdauer und/oder die vorgebbare Sendefrequenz innerhalb des durch die einschlägige Norm ETSI EN 300 718-1 festgelegten Rahmens zielgerichtet modifiziert werden.

Demnach ist die Verarbeitungsvorrichtung mit der Sendeeinheit gekoppelt, wobei die Verarbeitungsvorrichtung ausgelegt ist, in Abhängigkeit des zumindest einen von der Parameterermittlungsvorrichtung bereitgestellten bergungsrelevanten Parameters die vorgebbare Periodendauer und/oder die vorgebbare Einschaltdauer und/oder die vorgebbare Sendefrequenz des Sendesignals festzulegen und an die Sendeeinheit bereitzustellen, wobei die Sendeeinheit ausgelegt ist, das Sendesignal mit der von der Verarbeitungsvorrichtung bereitgestellten vorgebbaren Periodendauer und/oder der vorgebbaren Einschaltdauer und/oder der vorgebbaren Sendefrequenz zu senden. Auf diese Weise ist es nämlich nicht nötig, einen separaten Funkkanal bereitzustellen, der eine eigene Sendeeinheit mit einer eigenen Sendeantenne umfassen müsste. Die Ursache für die Bereitstellung eines zusätzlichen Funkkanals im oben erwähnten Stand der Technik liegt nämlich darin, dass die zusätzlichen Sendefrequenzen um mindestens den Faktor 1000 größer sind als die für Lawinen-Verschütteten-Suchgeräte genormte Sendefrequenz von 457 kHz. Aufgrund dieses großen Unterschieds wäre die ohnehin vorgesehene Sendeeinheit ungeeignet.

Im Gegensatz dazu ermöglicht die vorliegende Erfindung die Verwendung der ohnehin vorgesehenen Sendeeinheit zur kodierten Übertragung des mindestens einen bergungsrelevanten Parameters durch geschickte Auswahl der Übertragungsparameter innerhalb der zulässigen Wertebereiche.

Bevorzugt umfasst die Verarbeitungsvorrichtung dazu einen Speicher, insbesondere eine Look-up-Tabelle, in der vorgegebenen Werten des zumindest einen bergungsrelevanten Parameters und/oder Kombinationen einer Vielzahl bergungsrelevanter Parameter vorgegebene Werte für die vorgebbare Periodendauer und/oder die vorgebbare Einschaltdauer und/oder die vorgebbare Sendefrequenz zugeordnet sind. Auf diese Weise können demnach unterschiedlichste Kombinationen bergungsrelevanter Parameter durch Kodierung in dem durch die Periodendauer, die Einschaltdauer und die Sendefrequenz aufgespannten Raum übertragen werden und nach ihrer Dekodierung seitens des suchenden Suchgeräts zu einer Optimierung der Suche beitragen.

Der Wertebereich für die vorgebbare Periodendauer liegt bevorzugt im Intervall von 700 ms bis 1300 ms. Der Wertebereich für die vorgebbare Einschaltdauer liegt bevorzugt im Intervall von 70 ms bis 650 ms und der Wertebereich für die vorgebbare Sendefrequenz im Intervall von 456,920 kHz bis 457,080 kHz. Werden für die genannten Parameter Werte aus diesen genannten Wertebereichen gewählt, ist der für Lawinen-Verschütteten-Suchgeräte einschlägigen Norm ETSI EN 300 718-1 Genüge geleistet.

Die Verarbeitungsvorrichtung ist bevorzugt ausgelegt, die für das Sendesignal zu verwendende vorgebbare Periodendauer und/oder die vorgebbare Einschaltdauer und/oder die vorgebbare Sendefrequenz jedenfalls dann neu festzulegen, wenn eine Verschüttung festgestellt wurde. Mit anderen Worten sendet das Suchgerät bis zur Verschüttung mit beliebigen Werten für die Parameter Periodendauer, Einschaltdauer und Sendefrequenz, weil deren damit kodierte Werte bis zur Verschüttung ohne Bedeutung sind. Erst nach einer Verschüttung werden bergungsrelevante Parameter ermittelt und die Periodendauer und/oder die Einschaltdauer und/oder die Sendefrequenz zu deren Kodierung vereinbarungsgemäß gewählt. Diese Werte spiegeln sich dann im Sendesignal wider und dienen der Übertragung der benötigten Information in Form der bergungsrelevanten Parameter an den Suchenden.

Die Verarbeitungsvorrichtung ist bevorzugt ausgelegt, den zumindest einen bergungsrelevanten Parameter in vorgebbaren Zeitabständen nach der Verschüttung erneut zu ermitteln und die für das Sendesignal zu verwendende vorgebbare Periodendauer und/oder die vorgebbare Einschaltdauer und/oder die vorgebbare Sendefrequenz in Abhängigkeit von dem zumindest einen zuletzt ermittelten bergungsrelevanten Parameter festzulegen. Auf diese Weise wird ermöglicht, dass der Suchende stets auf dem aktuellen Stand hinsichtlich des mindestens einen bergungsrelevanten Parameters gehalten wird. Wenn sich beispielsweise bei mehreren Verschütteten ein bergungsrelevanter Parameter eines Verschütteten in einen kritischen Bereich bewegt, kann beispielsweise dessen Bergung vorgezogen werden. So wird ermöglicht, fortwährend die Reihenfolge bei der Bergung derart anzupassen, dass die Anzahl der erfolgreichen Bergungen maximiert werden kann.

In diesem Zusammenhang kann die Parameterermittlungsvorrichtung ausgelegt sein, im Betrieb des Suchgeräts die Orientierung des Suchgeräts fortlaufend zu bestimmen, wobei eine Verschüttung dadurch festgestellt wird, dass sich die fortlaufend bestimmte Orientierung über eine vorgebbare Zeitdauer nicht geändert hat. Wird demnach auf diese Weise eine Verschüttung festgestellt, ermittelt die Parameterermittlungsvorrichtung den mindestens einen bergungsrelevanten Parameter und beginnt durch entsprechende Einstellung von Periodendauer und/oder Einschaltdauer und/oder Sendefrequenz diesen an den Suchenden zu übermitteln.

Der zumindest eine bergungsrelevante Parameter ist bevorzugt ein Parameter aus der folgenden Gruppe: Pulsfrequenz des Verschütteten, Körpertemperatur des Verschütteten, Liegedauer seit Verschüttung, Orientierung des Suchgeräts im Raum, Montageart des Suchgeräts. Die beiden erstgenannten Parameter lassen unmittelbar einen Rückschluss auf den körperlichen Zustand des Verschütteten zu. Dazu sind jedoch entsprechende Sensoren nötig. Indirekt kann auf den Zustand des Verschütteten geschlossen werden, wenn die Liegedauer seit Verschüttung ermittelt wird. Dieser Parameter ist einfacher zu ermitteln, da lediglich ein Timer ab dem Zeitpunkt gestartet werden muss, ab dem die Verschüttung festgestellt wurde, siehe oben. Mittels der Orientierung des Suchgeräts im Raum kann bei bekannter Montageart des Suchgeräts auf die Position des Kopfs des Verschütteten geschlossen werden. Die größte Bedrohung für Lawinenverschüttete stellt nämlich der Tod durch Ersticken dar. Für die Rettung bedeutet dies, dem Verschütteten so schnell wie möglich die Atmung zu ermöglichen. Ist die Position des Kopfs bekannt, kann sinnvollerweise das Schaufeln so angelegt werden, dass als Erstes die Atmungsorgane, das heißt der Kopfbereich freigelegt werden. In diesem Zusammenhang wird angenommen, dass das sendende LVSG hinreichend starr zum Kopf des Verschütteten orientiert ist. Dies lässt sich beispielsweise durch eine starre Integration in einem festsitzenden Lawinenrucksack erreichen. Das sendende LVSGs ermittelt seine Orientierung bezüglich eines äußeren Bezugskoordinatensystems und überträgt diese an das suchende LVSG. Dabei können die vertikale und die horizontale Orientierung des LVSGs mit Beschleunigungssensoren und einem mindestens zweiachsigen Sensor für das Erdmagnetfeld in bekannter Weise ermittelt werden. Beide Orientierungen werden an das suchende LVSG gesendet. Dieses kombiniert die so empfangene Orientierung des LVSGs des Verschütteten, die auf gleiche Weise ermittelte eigene Orientierung und die Kenntnis über die exakte Montageart, d.h. Trageweise, des LVSGs, um eine Schätzung der Lage des Kopfs des Verschütteten auf einer Anzeigevorrichtung des suchenden LVSGs anzuzeigen.

Die Parameterermittlungsvorrichtung umfasst zumindest eine Vorrichtung aus der nachfolgenden Gruppe von Vorrichtungen: eine Vorrichtung zur Bestimmung der Pulsfrequenz des Verschütteten, eine Vorrichtung zum Bestimmen der Körpertemperatur des Verschütteten, eine Vorrichtung zum Bestimmen der Liegedauer seit Verschüttung, eine Vorrichtung zum Bestimmen der Orientierung des Suchgeräts im Raum, eine Vorrichtung zum Eingeben der Montageart des Suchgeräts durch einen Benutzer. Hinsichtlich der letztgenannten Vorrichtung kann die Eingabevorrichtung ausgelegt sein, zumindest zwei der folgenden Auswahlmöglichkeiten für die Montageart des Suchgeräts anzubieten: Montage des Suchgeräts im Rucksack, Montage des Suchgeräts an der Hüfte auf der Bauchseite, Montage des Suchgeräts an der Hüfte auf der linken/rechten Seite, Montage des Suchgeräts im Helm. Auf diese Weise kann ein Benutzer einfach und in assistierter Form die spezielle Montage des Suchgeräts in sein Suchgerät eingeben. Aufgrund dieser einfachen Eingabemöglichkeit wird besonders zuverlässig sichergestellt, dass der Suchende seine tatsächliche Montageart angibt, sodass im Verschüttungsfall tatsächlich besonders schnell sein Kopfbereich freigelegt werden kann.

Gemäß einer bevorzugten Ausführungsform umfasst das Suchgerät weiterhin mindestens eine Empfangseinheit mit mindestens einer Empfangsantenne zum Empfangen des Sendesignals sowie eine Anzeigevorrichtung, die mit der Verarbeitungsvorrichtung gekoppelt ist. Dabei ist die Verarbeitungsvorrichtung ausgelegt, den zumindest einen bergungsrelevanten Parameter aus einem empfangenen Sendesignal zu ermitteln und für die Anzeige auf der Anzeigevorrichtung aufzubereiten. Ein derart ausgestattetes Suchgerät kann damit sowohl bergungsrelevante Parameter versenden als auch bergungsrelevante Parameter empfangen, auswerten und dem Benutzer zur Anzeige bringen, dies sowohl für einen Verschütteten als auch eine Mehrzahl an Verschütteten. Die mindestens eine Empfangsantenne kann dabei mit der mindestens einen Sendeantenne identisch sein. Die Verarbeitungsvorrichtung kehrt bei der Auswertung des empfangenen Sendesignals letztlich die beim Senden vorgenommene Kodierung des mindestens einen bergungsrelevanten Parameters in dem mindestens einen Übertragungsparameter durch entsprechende Dekodierung um. Auf diese Weise wirken bevorzugt zwei erfindungsgemäße Suchgeräte in einem System zusammen: Dabei sendet ein erfindungsgemäßes verschüttetes LVSG den mindestens einen bergungsrelevanten Parameter in kodierter Form, während ein erfindungsgemäßes suchendes LVSG die in den Übertragungsparameter(n) kodierte Information auswertet, also dekodiert, und dem Suchenden anzeigt. Deshalb ist es bevorzugt, wenn alle Mitglieder einer Gruppe mit erfindungsgemäßen Suchgeräten ausgerüstet sind. Ist nur das verschüttete LVSG erfindungsgemäß weitergebildet, erfolgt die Suche nach dem Stand der Technik. Ist lediglich das suchende LVSG erfindungsgemäß weitergebildet, wird zwar eine Kodierung mindestens eines bergungsrelevanten Parameters in den verwendeten Übertragungsparametern durch das suchende LVSG angenommen, woraus sich im Mittel allerdings weder ein Vorteil noch ein Nachteil ergibt.

In diesem Zusammenhang sind die Verarbeitungsvorrichtung und die Anzeigevorrichtung ausgelegt und wirken zusammen, um aus dem übertragenen mindestens einen bergungsrelevanten Parameter zumindest eine der folgenden Größen zu ermitteln und auf der Anzeigevorrichtung darzustellen: Pulsfrequenz des Verschütteten, Körpertemperatur des Verschütteten, Liegedauer seit Verschüttung, Position des Kopfs des Verschütteten. Durch die Anzeige auf der Anzeigevorrichtung können diese Parameter vom Suchenden besonders schnell erfasst werden, wobei fortlaufende Aktualisierungen der ermittelten Parameter ebenfalls dargestellt werden. Weiter kann vorgesehen werden, dass sich die Darstellungsart ändert oder ein anderweitiges optisches oder ein akustisches Notfallsignal abgegeben wird, wenn bestimmte Grenzwerte über- oder unterschritten werden: Unterschreitet beispielsweise die Pulsfrequenz des Verschütteten einen unteren Grenzwert, beispielsweise 40 Schläge pro Minute, kann vorgesehen sein, dass die Anzeigevorrichtung zu blinken beginnt oder das suchende LVSG einen Ton abzugeben beginnt, um den Suchenden auf die nunmehr besonders große Eilbedürftigkeit hinzuweisen beziehungsweise den Suchenden aufzufordern von der Bergung eines ersten Verschütteten zur Bergung eines zweiten Verschütteten zu wechseln. Entsprechendes kann bei Unterschreiten der Körpertemperatur vorgesehen werden.

Weitere vorteilhafte Ausführungsformen ergeben sich aus den Unteransprüchen.

Die mit Bezug auf das erfindungsgemäße Suchgerät vorgestellten bevorzugten Ausführungsformen und deren Vorteile gelten entsprechend, soweit anwendbar, für das erfindungsgemäße Verfahren zum Betreiben eines Suchgeräts.

Im Nachfolgenden werden nunmehr Ausführungsformen der vorliegenden Erfindung unter Bezugnahme auf die beigefügten Zeichnungen näher beschrieben. Es zeigen:
- Fig. 1: in schematischer Darstellung ein Ausführungsbeispiel eines erfindungsgemäßen Suchgeräts; und
- Fig. 2: in schematischer Darstellung ein Ausführungsbeispiel eines erfindungsgemäßen Verfahrens.

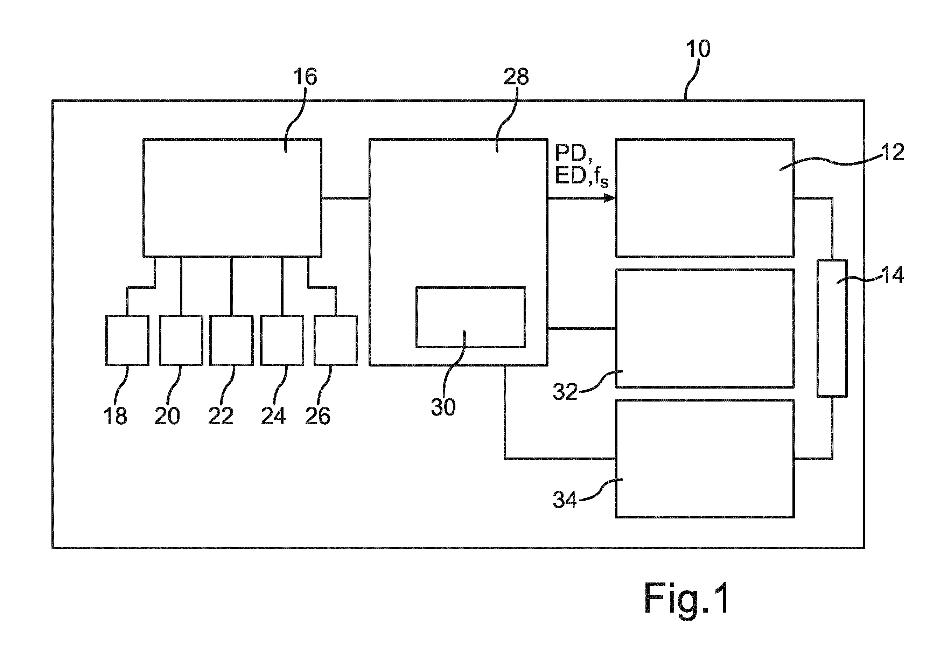

Fig. 1 zeigt in schematischer Darstellung ein Ausführungsbeispiel eines erfindungsgemäßen Suchgeräts 10. Dieses umfasst eine Sendeeinheit 12 mit mindestens einer Sendeantenne 14, wobei die Sendeeinheit ausgelegt ist, On-Off-modulierte Sendesignale zu senden, welche zumindest einen Sendepuls umfassen, der eine vorgebbare Sendefrequenz, eine vorgebbare Periodendauer sowie eine vorgebbare Einschaltdauer aufweist. Unter On-Off-modulierten Signalen sind Signale zu verstehen, bei denen ein sinusförmiger Träger periodisch ein- und ausgeschaltet wird. Dabei ist fₛ die Frequenz der Sinusschwingung, PD die Zeit zwischen zwei Einschaltvorgängen und ED die Zeit zwischen einem Ein- und dem darauffolgenden Ausschaltvorgang.

Eine Parameterermittlungsvorrichtung 16 ist ausgelegt, zumindest einen bergungsrelevanten Parameter zu ermitteln. Zu diesem Zweck ist sie gekoppelt mit mindestens einer der folgenden Vorrichtungen: einer Vorrichtung 18 zum Bestimmen der Pulsfrequenz des Verschütteten, einer Vorrichtung 20 zum Bestimmen der Körpertemperatur des Verschütteten, einer Vorrichtung 22 zum Bestimmen der Liegedauer seit Verschüttung, einer Vorrichtung 24 zum Bestimmen der Orientierung des Suchgeräts 10 im Raum sowie einer Vorrichtung 26 zum Eingeben der Montageart des Suchgeräts 10 durch einen Benutzer.

Zwischen die Parameterermittlungsvorrichtung 16 und die Sendeeinheit 12 ist eine Verarbeitungsvorrichtung 28 gekoppelt, die ausgelegt ist, in Abhängigkeit des zumindest einen mit der Parameterermittlungsvorrichtung 16 bereitgestellten bergungsrelevanten Parameters die vorgebbare Periodendauer PD und/oder die vorgebbare Einschaltdauer ED und/oder die vorgebbare Sendefrequenz fₛ des Sendesignals festzulegen und an die Sendeeinheit 12 bereitzustellen. Die Sendeeinheit 12 ihrerseits ist ausgelegt, das Sendesignal mit der von der Verarbeitungsvorrichtung 28 bereitgestellten vorgebbaren Periodendauer PD und/oder der vorgebbaren Einschaltdauer ED und/oder der vorgebbaren Sendefrequenz fₛ über die Sendeantenne 14 zu senden.

Die Verarbeitungsvorrichtung 28 umfasst einen Speicher 30, der besonders bevorzugt als Look-up-Tabelle ausgeführt sein kann, und in dem vorgegebenen Werten des zumindest einen bergungsrelevanten Parameters und/oder Kombinationen einer Vielzahl bergungsrelevanter Parameter vorgegebene Werte für die vorgebbare Periodendauer PD und/oder die vorgebbare Einschaltdauer ED und/oder die vorgebare Sendefrequenz fₛ zugeordnet sind. Der Wertebereich für die vorgebbare Periodendauer PD liegt insbesondere im Intervall von 700 ms bis 1300 ms, der Wertebereich für die vorgebbare Einschaltdauer ED liegt im Intervall von 70 ms bis 650 ms und/oder der Wertebereich für die vorgebbare Sendefrequenz fₛ liegt im Intervall von 456,920 kHz bis 457,080 kHz.

Die Parameterermittlungsvorrichtung 16 ist ausgelegt, im Betrieb des Suchgeräts 10 die Orientierung des Suchgeräts 10 in an sich bekannter Weise fortlaufend zu bestimmen, wobei eine Verschüttung dadurch festgestellt wird, dass sich die fortlaufend bestimmte Orientierung über eine vorgebbare Zeitdauer nicht geändert hat. Wird demnach eine Verschüttung festgestellt, legt die Verarbeitungsvorrichtung 28 die für das Sendesignal zu verwendende vorgebbare Periodendauer PD und/oder die vorgebbare Einschaltdauer ED und/oder die vorgebbare Sendefrequenz fₛ dann neu fest.

Die Verarbeitungsvorrichtung 28 ist ausgelegt, den zumindest einen bergungsrelevanten Parameter in vorgebbaren Zeitabständen nach der Verschüttung durch entsprechendes Auslesen aus der Parameterermittlungsvorrichtung 16 erneut zu ermitteln und die für das Sendesignal zu verwendende vorgebbare Periodendauer PD und/oder die vorgebbare Einschaltdauer ED und/oder die vorgebbare Sendefrequenz fₛ in Abhängigkeit von dem zumindest einen zuletzt ermittelten bergungsrelevanten Parameter festzulegen.

Das Suchgerät 10 umfasst weiterhin eine Anzeigevorrichtung 32, die mit der Verarbeitungsvorrichtung 28 gekoppelt ist und mit der Vorrichtung zum Eingeben der Montageart des Suchgeräts 10 durch einen Benutzer zusammenwirkt. Letztere ist ausgelegt, zumindest zwei der folgenden Auswahlmöglichkeiten für die Montageart des Suchgeräts 10 anzubieten: Montage des Suchgeräts 10 im Rucksack, Montage des Suchgeräts 10 an der Hüfte auf der Bauchseite, Montage des Suchgeräts 10 an der Hüfte auf der linken/rechten Seite, Montage des Suchgeräts 10 im Helm. Dazu weist die Eingabevorrichtung 26 eine Benutzerschnittstelle auf, die beispielsweise durch Tasten auf dem Suchgerät 10 gebildet sein kann.

Das Suchgerät 10 umfasst weiterhin eine Empfangseinheit 34, die mit mindestens einer Empfangsantenne zum Empfangen des Sendesignals gekoppelt ist, wobei die mindestens eine Empfangsantenne mit der mindestens einen Sendeantenne 14 identisch sein kann. Die Verarbeitungsvorrichtung 28 ist mit der Empfangseinheit 34 gekoppelt und ausgelegt, den zumindest einen bergungsrelevanten Parameter aus einem empfangenen Sendesignal zu ermitteln und für die Anzeige auf der Anzeigevorrichtung 32 aufzubereiten. In diesem Zusammenhang können die Verarbeitungsvorrichtung 28 und die Anzeigevorrichtung 32 ausgelegt sein und zusammenwirken, um aus dem übertragenen mindestens einen bergungsrelevanten Parameter zumindest eine der folgenden Größen zu ermitteln und auf der Anzeigevorrichtung 32 darzustellen: Pulsfrequenz des Verschütteten, Körpertemperatur des Verschütteten, Liegedauer seit Verschüttung, Position des Kopfs des Verschütteten. Wie bereits erwähnt, kann dies für einen Verschütteten oder gleichzeitig für mehrere Verschüttete erfolgen.

Ein mit dem sendenden Suchgerät 10 zusammenwirkendes suchendes Suchgerät kann ausgelegt sein, den Wechsel - infolge der Feststellung einer Verschüttungssituation - des mindestens einen Übertragungsparameters zu detektieren und bei Detektion eines derartigen Wechsel davon auszugehen, dass in den nun vom sendenden Suchgerät 10 verwendeten Übertragungsparametern Angaben über mindestens einen bergungsrelevanten Parameter kodiert sind. Dies kann beispielsweise dann sinnvoll sein, wenn ein erfindungsgemäßes Suchgerät 10 ausgebildet ist, während einer Tour die Übertragungsparameter der Suchgeräte der anderen Teilnehmer der Tour zu lernen und in einer Liste abzulegen. Wenn dann eine Suchsituation entsteht, kann ein erfindungsgemäßes Suchgerät 10 den Wechsel des mindestens einen Übertragungsparameters eines verschütteten Suchgeräts erkennen, da in der gelernten Liste dem betreffenden Suchgerät nunmehr mindestens ein anderer Übertragungsparameter zugewiesen ist.

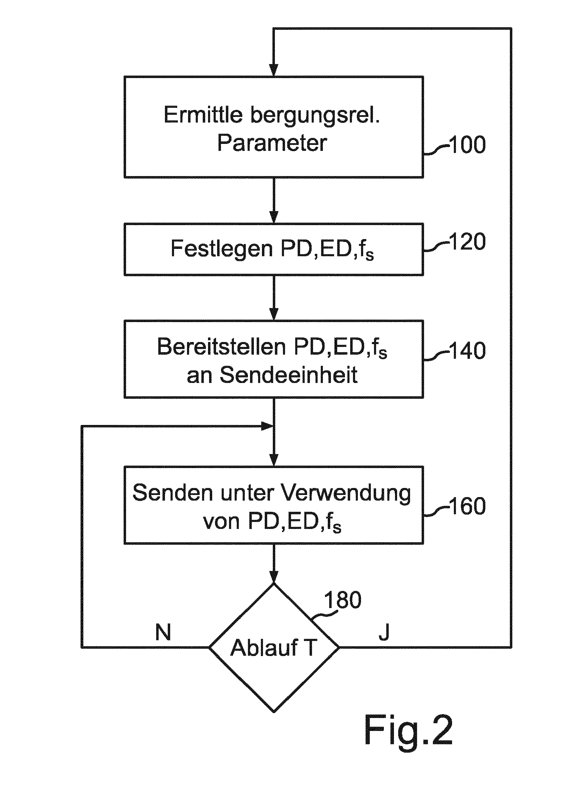

Fig. 2 zeigt in schematischer Darstellung ein Ablaufdiagramm eines Ausführungsbeispiels eines erfindungsgemäßen Verfahrens. Dabei wird in Schritt 100 der mindestens eine bergungsrelevante Parameter ermittelt. Daraufhin werden die Periodendauer PD und/oder die Einschaltdauer ED und/oder die Sendefrequenz fₛ in einem Schritt 120 festgelegt. Genaugenommen werden aus einem Speicher die Werte für die die Periodendauer PD und/oder die Einschaltdauer ED und/oder die Sendefrequenz fₛ ausgelesen, die dem ermittelten mindestens einen bergungsrelevanten Parameter zugeordnet sind. In einem sich daran anschließenden Schritt 140 werden die Periodendauer PD, die Einschaltdauer ED sowie die Sendefrequenz fₛ an die Sendeeinheit 12 bereitgestellt. Diese sendet dann in einem Schritt 160 das Sendesignal unter Verwendung der bereitgestellten Werte für die Periodendauer PD, die Einschaltdauer ED sowie die Sendefrequenz fₛ. Im Schritt 180 wird geprüft, ob eine vorgebbare Zeitdauer T abgelaufen ist. Ist dies nicht der Fall, wird das Verfahren mit Schritt 160 fortgesetzt. Nach einer abgelaufenen Zeitdauer T jedoch werden die bergungsrelevanten Parameter erneut ermittelt, weshalb das Verfahren zum Schritt 100 zurück verzweigt.

## Patentansprüche

1. Suchgerät (10), insbesondere Lawinen-Verschütteten-Suchgerät, mit
- einer Sendeeinheit (12) mit mindestens einer Sendeantenne (14) zum Senden On-Off-modulierter Sendesignale, welche zumindest einen Sendepuls umfassen, der eine vorgebbare Sendefrequenz, eine vorgebbare Periodendauer sowie eine vorgebbare Einschaltdauer aufweist;
- einer Parameterermittlungsvorrichtung (16), die ausgelegt ist, zumindest einen bergungsrelevanten Parameter zu ermitteln; sowie
- einer Verarbeitungsvorrichtung (28), die mit der Parameterermittlungsvorrichtung (16) gekoppelt und ausgelegt ist, den zumindest einen bergungsrelevanten Parameter zu verarbeiten;
**dadurch gekennzeichnet,**
**dass** die Verarbeitungsvorrichtung (28) weiterhin mit der Sendeeinheit (12) gekoppelt ist,
wobei die Verarbeitungsvorrichtung (28) ausgelegt ist, in Abhängigkeit des zumindest einen von der Parameterermittlungsvorrichtung (16) bereitgestellten bergungsrelevanten Parameters die vorgebbare Periodendauer und/oder die vorgebbare Einschaltdauer und/oder die vorgebbare Sendefrequenz des Sendesignals festzulegen und an die Sendeeinheit (12) bereitzustellen,
wobei die Sendeeinheit (12) ausgelegt ist, das Sendesignal mit der von der Verarbeitungsvorrichtung (28) bereitgestellten vorgebbaren Periodendauer und/oder der vorgebbaren Einschaltdauer und/oder der vorgebbaren Sendefrequenz zu senden.

2. Suchgerät (10) nach Anspruch 1,
**dadurch gekennzeichnet,**
**dass** die Verarbeitungsvorrichtung (28) einen Speicher (30), insbesondere eine Look-up-Tabelle, umfasst, in der vorgegebenen Werten des zumindest einen bergungsrelevanten Parameters und/oder Kombinationen einer Vielzahl bergungsrelevanter Parameter vorgegebene Werte für die vorgebbare Periodendauer und/oder die vorgebbare Einschaltdauer und/oder die vorgebbare Sendefrequenz zugeordnet sind.

3. Suchgerät (10) nach Anspruch 2,
**dadurch gekennzeichnet,**
**dass** der Wertebereich für die vorgebbare Periodendauer im Intervall von 700 ms bis 1300 ms liegt und/oder der Wertebereich für die vorgebbare Einschaltdauer im Intervall von 70 ms bis 650 ms liegt und/oder der Wertebereich für die vorgebbare Sendefrequenz im Intervall von 456,920 kHz bis 457,080 kHz liegt.

4. Suchgerät (10) nach einem der vorhergehenden Ansprüche,
**dadurch gekennzeichnet,**
**dass** die Verarbeitungsvorrichtung (28) ausgelegt ist, die für das Sendesignal zu verwendende vorgebbare Periodendauer und/oder die vorgebbare Einschaltdauer und/oder die vorgebbare Sendefrequenz jedenfalls dann neu festzulegen, wenn eine Verschüttung festgestellt wurde.

5. Suchgerät (10) nach Anspruch 4,
**dadurch gekennzeichnet,**
**dass** die Verarbeitungsvorrichtung (28) ausgelegt ist, den zumindest einen bergungsrelevanten Parameter in vorgebbaren Zeitabständen nach der Verschüttung erneut zu ermitteln und die für das Sendesignal zu verwendende vorgebbare Periodendauer und/oder die vorgebbare Einschaltdauer und/oder die vorgebbare Sendefrequenz in Abhängigkeit von dem zumindest einen zuletzt ermittelten bergungsrelevanten Parameter festzulegen.

6. Suchgerät (10) nach einem der Ansprüche 4 oder 5,
**dadurch gekennzeichnet,**
**dass** die Parameterermittlungsvorrichtung (16) ausgelegt ist, im Betrieb des Suchgeräts (10) die Orientierung des Suchgeräts (10) fortlaufend zu bestimmen, wobei eine Verschüttung dadurch festgestellt wird, dass sich die fortlaufend bestimmte Orientierung über eine vorgebbare Zeitdauer nicht geändert hat.

7. Suchgerät (10) nach einem der vorhergehenden Ansprüche,
**dadurch gekennzeichnet,**
**dass** der zumindest eine bergungsrelevante Parameter ein Parameter aus der folgenden Gruppe ist:
- Pulsfrequenz des Verschütteten;
- Körpertemperatur des Verschütteten;
- Liegedauer seit Verschüttung;
- Orientierung des Suchgeräts (10) im Raum;
- Montageart des Suchgeräts (10).

8. Suchgerät (10) nach Anspruch 7,
**dadurch gekennzeichnet,**
**dass** die Parameterermittlungsvorrichtung (16) zumindest eine Vorrichtung (18, 20, 22, 24, 26) aus der nachfolgenden Gruppe von Vorrichtungen (18, 20, 22, 24, 26) umfasst:
- eine Vorrichtung (18) zum Bestimmen der Pulsfrequenz des Verschütteten;
- eine Vorrichtung (20) zum Bestimmen der Körpertemperatur des Verschütteten;
- eine Vorrichtung (22) zum Bestimmen der Liegedauer seit Verschüttung;
- eine Vorrichtung (24) zum Bestimmen der Orientierung des Suchgeräts (10) im Raum;
- eine Vorrichtung (26) zum Eingeben der Montageart des Suchgeräts (10) durch einen Benutzer.

9. Suchgerät (10) nach Anspruch 8,
**dadurch gekennzeichnet,**
**dass** die Eingabevorrichtung (26) ausgelegt ist, zumindest zwei der folgenden Auswahlmöglichkeiten für die Montageart des Suchgeräts (10) anzubieten:
- Montage des Suchgeräts (10) im Rucksack;
- Montage des Suchgeräts (10) an der Hüfte auf der Bauchseite;
- Montage des Suchgeräts (10) an der Hüfte auf der linken/rechten Seite;
- Montage des Suchgeräts (10) im Helm.

10. Suchgerät (10) nach einem der vorhergehenden Ansprüche,
**dadurch gekennzeichnet,**
**dass** das Suchgerät (10) weiterhin umfasst:
- eine Empfangseinheit (34) mit mindestens einer Empfangsantenne zum Empfangen des Sendesignals; sowie
- eine Anzeigevorrichtung (32), die mit der Verarbeitungsvorrichtung (28) gekoppelt ist;
wobei die Verarbeitungsvorrichtung (28) ausgelegt ist, den zumindest einen bergungsrelevanten Parameter aus einem empfangenen Sendesignal zu ermitteln und für die Anzeige auf der Anzeigevorrichtung (32) aufzubereiten.

11. Suchgerät (10) nach Anspruch 10,
**dadurch gekennzeichnet,**
**dass** die Verarbeitungsvorrichtung (28) und die Anzeigevorrichtung (32) ausgelegt sind und zusammenwirken, um aus dem übertragenen mindestens einen bergungsrelevanten Parameter zumindest eine der folgenden Größen zu ermitteln und auf der Anzeigevorrichtung (32) darzustellen:
- Pulsfrequenz des Verschütteten;
- Körpertemperatur des Verschütteten;
- Liegedauer seit Verschüttung;
- Position des Kopfs des Verschütteten.

12. Verfahren zum Betreiben eines Suchgeräts (10), insbesondere Lawinen-Verschütteten-Suchgerät (10), mit einer Sendeeinheit (12) mit mindestens einer Sendeantenne zum Senden On-Off-modulierter Sendesignale, welche zumindest einen Sendepuls umfassen, der eine vorgebbare Sendefrequenz (fₛ), eine vorgebbare Periodendauer (PD) sowie eine vorgebbare Einschaltdauer (ED) aufweist, folgenden Schritt (100) umfassend:
a) Ermitteln (Schritt 100) zumindest eines bergungsrelevanten Parameters;
**gekennzeichnet durch** folgende weiteren Schritte (120, 140, 160):
b) Festlegen (Schritt 120) der vorgebbaren Periodendauer und/oder der vorgebbaren Einschaltdauer und/oder der vorgebbaren Sendefrequenz des Sendesignals in Abhängigkeit des zumindest einen von der Parameterermittlungsvorrichtung (16) ermittelten bergungsrelevanten Parameters;
c) Bereitstellen (Schritt 140) der festgelegten Periodendauer und/oder der festgelegten Einschaltdauer und/oder der festgelegten Sendefrequenz an die Sendeeinheit (12); und
d) Senden (Schritt 160) des Sendesignals mit der festgelegten Periodendauer und/oder der festgelegten Einschaltdauer und/oder der festgelegten Sendefrequenz.
